# FASCICULE DE BREVET EUROPEEN

(11) **EP 3 060 727 B1**
(45) Date de publication et mention de la délivrance du brevet: **26.08.2020**
(21) Numéro de dépôt: 14824053.4
(22) Date de dépôt: 23.10.2014
(51) Int. Cl.: E04F 10/10

(54) **BRISE-SOLEIL COMPORTANT UNE PARTIE FIXE ET UNE PARTIE MOBILE MOTORISÉE, ÉQUIPÉES DE CELLULES PHOTOVOLTAÏQUES**
SONNENBLENDE MIT EINEM FESTEN TEIL UND EINEM MOTORISIERTEN BEWEGLICHEN TEIL MIT JEWEILS FOTOVOLTAIKZELLEN
SUNSHADE COMPRISING A FIXED PART AND A MOTORIZED MOVING PART, BOTH PARTS BEING EQUIPPED WITH PHOTOVOLTAIC CELLS

(30) Priorité: 25.10.2013 FR 1360429
(43) Date de publication de la demande: 31.08.2016
(73) Titulaire: GSE Integration, 93400 Saint-Ouen (FR); Sika S.r.L., 31100 Treviso (IT)
(72) Inventeur: SECCO, Pietro, I-31030 Dosson Di Casier (IT); SABBAN, Gilles Ylan, F-92200 Neuilly Sur Seine (FR)
(74) Mandataire: Loyer & Abello
(86) Numéro de dépôt international: PCT/FR2014/052708
(87) Numéro de publication internationale: WO 2015/059423

(56) Documents cités:
- EP-A1- 0 298 528
- WO-A2-2013/008043
- JP-U- S5 288 419
- JP-U- S6 019 644
- JP-U- S6 194 124
- KR-B1- 101 256 836
- US-A1- 2013 192 770

## Description

La présente invention concerne un brise-soleil prévu pour protéger du rayonnement solaire, équipé de cellules photovoltaïques.

Il est connu de disposer sur des façades de bâtiments ou d'abris exposées au soleil, des panneaux formant des brise-soleils qui limitent ou occultent le rayonnement solaire. On peut en particulier disposer ce type de panneau devant des ouvertures vitrées du bâtiment, afin de diminuer le rayonnement solaire dans les pièces exposées qui peut apporter une lumière trop forte causant un éblouissement, ainsi qu'une élévation de température par un effet de serre au travers des vitrages.

Ce type de brise-soleil peut comporter des panneaux fixes, ou mobiles comme des lames de store afin de s'ajuster en fonction de l'intensité et de l'inclinaison du rayonnement solaire, et des besoins du bâtiment.

Le brise-soleil permet de maitriser l'entrée de chaleur dans les bâtiments, et donc de réduire l'utilisation des climatisations. Il fait partie des solutions intéressantes pour favoriser les économies d'énergie en diminuant les coûts d'exploitation d'un bâtiment.

De plus le brise-soleil peut comporter des formes, un aspect et une couleur qui ajoutent une finition et une décoration au bâtiment.

Par ailleurs il est connu de disposer sur des bâtiments des panneaux photovoltaïques, afin d'utiliser ces bâtiments comme des supports recevant les cellules soumises au rayonnement afin de générer une énergie électrique suivant l'exposition au soleil.

Cependant ces panneaux photovoltaïques sont généralement peu esthétiques, et n'ont pas d'autre fonction que cette récupération d'énergie solaire.

Le document JPS6019644 U décrit un brise-soleil destiné à être fixé sur une tente et qui comprend une partie fixe équipée de traverses qui supportent des moyens de guidage d'une partie mobile permettant de la déplacer vers la partie fixe. Les moyens de guidage comportent un rail recevant un jeu de deux roulettes.

La présente invention a notamment pour but d'éviter ces inconvénients de la technique antérieure, en permettant une meilleure utilisation des brise-soleils.

Elle propose à cet effet un brise-soleil destiné à être fixé sur un bâtiment par des supports disposés sur un côté intérieur, afin de protéger ce bâtiment du rayonnement solaire, remarquable en ce qu'il comporte une partie fixe équipée des supports, et une partie mobile guidée par des moyens de guidage permettant de la déplacer vers la partie fixe pour obtenir un recouvrement de ces parties sous l'action d'un système de motorisation, ces deux parties recevant des cellules photovoltaïques.

Un avantage de ce brise-soleil est qu'avec le système de motorisation on peut ajuster sa dimension en déployant ou en rétractant la partie mobile en fonction du rayonnement solaire et de la protection demandée pour le bâtiment, tout en produisant une quantité d'énergie électrique optimisée par le brise-soleil disposant d'une surface de cellules photovoltaïques la plus grande possible, suivant la position de cette partie mobile.

Le brise-soleil selon l'invention peut comporter de plus une ou plusieurs des caractéristiques suivantes, qui peuvent être combinées entre elles.

Avantageusement, la partie fixe comporte des traverses disposées transversalement par rapport au côté intérieur, qui supporte les moyens de guidage. On réalise ainsi facilement une armature rigide.

Avantageusement les moyens de guidage comportent un rail de guidage qui reçoit des roulettes, ce qui permet de réaliser un guidage précis disposant d'un faible frottement.

Dans ce cas, chaque traverse peut comporter à son extrémité extérieure un support qui reçoit les roulettes ajustées dans le rail de guidage. L'armature de la partie mobile est ainsi rigidement fixée à celle de la partie fixe.

En particulier, chaque support peut comporter de chaque côté d'un plan vertical un jeu de quatre roulettes, ce jeu de roulettes étant ajusté dans une des deux sections en « C » du rail de guidage. On obtient ainsi un guidage rigide qui peut supporter des charges en porte-à-faux importantes appliquées sur la partie mobile.

Avantageusement le brise-soleil comporte un moyen de réglage de l'inclinaison disposé entre la partie fixe et les supports, qui permet une optimisation de son inclinaison en fonction de la position générale du soleil.

En particulier la partie fixe peut être reliée à chaque support par un pivot, et par une tige filetée qui règle la rotation de cette partie fixe autour de ce pivot.

Avantageusement, le moyen de réglage de l'inclinaison permet un réglage de la pente des panneaux photovoltaïques par rapport à l'horizontale, qui est comprise entre environ 30 et 40°.

Avantageusement, le brise-soleil comporte une brosse balayant la surface de cellules photovoltaïques lors des mouvements de la partie mobile. On obtient ainsi de manière simple et économique une surface de ces cellules qui reste propre.

Avantageusement le système de motorisation comporte des actionneurs comprenant des vérins électriques disposés transversalement.

Avantageusement, le système de motorisation comporte une commande qui déplace automatiquement la partie mobile suivant les conditions climatiques comme l'ensoleillement ou le vent. On assure ainsi automatiquement une optimisation de la couverture contre le rayonnement et de la production d'énergie électrique, ainsi qu'une protection contre les vents violents.

Avantageusement, le système de motorisation comporte une commande disposant d'une alimentation électrique indépendante de secours permettant de réaliser de manière autonome la rétractation de la partie mobile.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue d'ensemble d'un brise-soleil selon l'invention ;
- la figure 2 est une vue en coupe transversale de ce brise-soleil déployé, suivant le plan de coupe II-II qui se trouve entre deux traverses ;
- la figure 3 est une vue en coupe transversale de ce brise-soleil suivant le même plan de coupe, qui est rétracté ;
- la figure 4 est une vue de détail du guidage de la partie mobile, suivant un plan de coupe IV-IV passant par une traverse ;
- la figure 5 est une vue partielle en coupe longitudinale du brise-soleil, suivant le plan de coupe V-V passant par le guidage entre les deux parties du montant transversal ;
- la figure 6 est une vue partielle en coupe longitudinale de la partie fixe du brise-soleil suivant le plan de coupe VI-VI ; et
- la figure 7 est une vue en coupe du support d'un montant transversal comportant un vérin de commande, suivant le plan de coupe IV-IV.

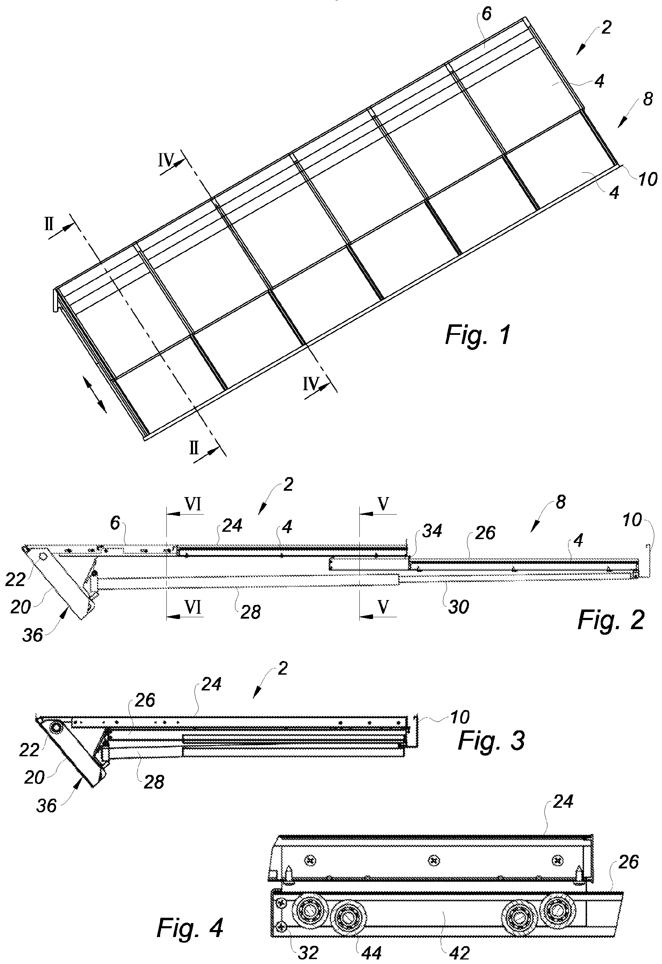

Les figures 1 et 2 présentent un brise-soleil déployé formant un rectangle allongé suivant une direction longitudinale, disposant d'une longueur d'environ 10m et d'une largeur d'environ 2,7m, comprenant une longueur appelée côté intérieur destinée à être fixée sur un mur ou surface verticale d'un bâtiment, le côté extérieur opposé étant incliné vers le bas.

Le brise-soleil comporte une partie fixe 2 comprenant suivant sa longueur six tronçons identiques comportant chacun le long du côté intérieur un panneau de couverture 6 de largeur réduite, et une deuxième surface de plus grande largeur recouverte par un panneau photovoltaïque 4.

Le brise-soleil comporte une partie mobile 8 comprenant suivant sa longueur six panneaux photovoltaïques 4 qui couvrent entièrement cette partie mobile, disposés chacun en face d'un panneau identique de la partie fixe 2.

La partie fixe 2 du brise-soleil comporte une armature comprenant une succession de traverses 24 qui se trouvent à chaque extrémité et à chaque jonction entre des tronçons. Chaque traverse 24 est reliée par une vis formant un pivot 22 à un support 20 en tôle pliée, comprenant une base plane 36 prévue pour être fixée verticalement sur le bâtiment, et des rebords de chaque côté qui le rigidifie.

La partie mobile 8 du brise-soleil comporte une armature comprenant une succession de rails de guidage 26 alignés sur chaque traverse 24, et guidés par ces traverses. Une gouttière longitudinale 10 est disposée sur le côté extérieur de la partie mobile 8, afin de recevoir l'eau en cas de pluie.

Le brise-soleil comporte des vérins télescopiques 28 à motorisation électrique, disposés chacun sous une traverse 24 et un rail de guidage 26, qui sont installés en partant des extrémités tous les deux panneaux photovoltaïques 4.

Chaque vérin télescopique 28 comportant une tige coulissante 30, a l'extrémité de son corps fixée au support 20, l'extrémité opposée de la tige étant fixée au côté extérieur du rail de guidage 26. Les vérins télescopiques commandés de manière synchronisée, permettent un déploiement de la partie mobile 8, ou sa rétractation en la glissant entièrement en dessous de la partie fixe, comme présenté figure 3.

Le côté extérieur de la partie fixe 2 se termine par une barre de jonction reliant l'extrémité des traverses 24 entre elles, comprenant une brosse 34 tournée vers le bas qui est en appui sur le dessus des panneaux photovoltaïques 4 de la partie mobile 8, afin d'assurer une certaine étanchéité ainsi qu'un nettoyage de ces panneaux lors du mouvement de la partie mobile.

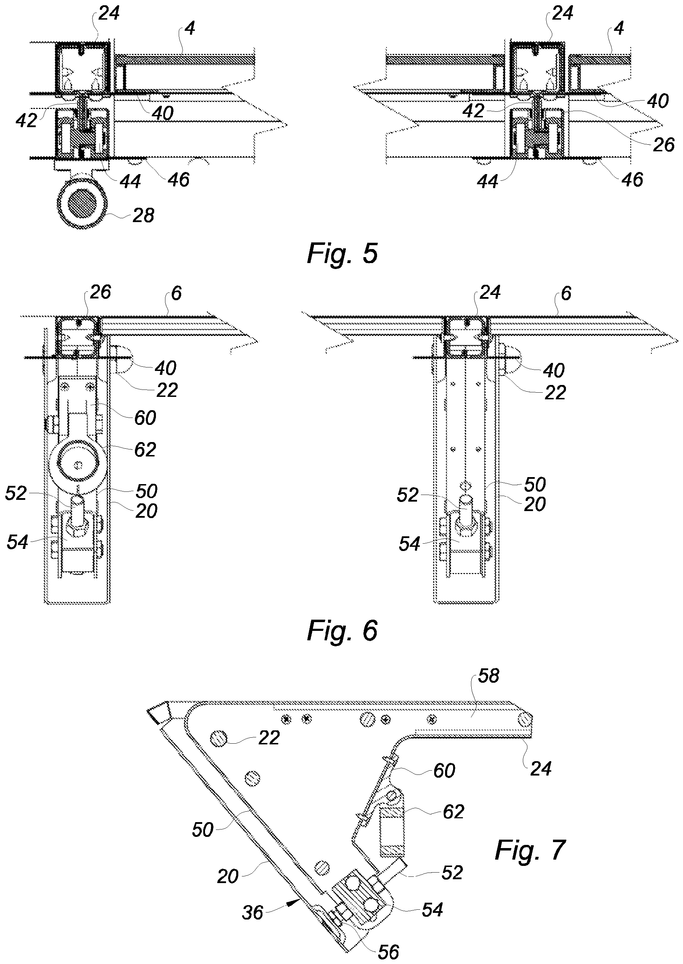

Les figures 4 et 5 présentent une traverse 24 composée de deux profilés en tôle métallique pliée qui sont assemblés, formant sensiblement un tube de section carrée donnant de la rigidité à l'armature de la partie fixe 2. Les traverses 24 sont équipées de chaque côté d'une aile latérale inférieure 40, ces ailes supportant un panneau photovoltaïque 4 disposé d'un seul côté pour une traverse d'extrémité, ou deux panneaux de chaque côté pour les autres traverses.

L'extrémité extérieure de chaque traverse 24 reçoit un support 42 constitué par une tôle pliée, comprenant dans sa partie supérieure une section carrée ajustée dans le tube carré de cette traverse et fixée par des vis, ce support disposant d'un plan vertical inférieur traversant une rainure centrale du tube carré, afin de permettre la fixation d'un jeu de quatre roulettes 44 sur chaque face de ce plan. Les roulettes 44 comportent une bague en nylon montée sur un roulement à billes.

Le rail de guidage 26 comporte deux sections latérales en forme de « C » disposant d'ouvertures tournées l'une vers l'autre, formées par deux profilés de tôle pliée qui sont assemblés entre eux. Les rails de guidage 26 sont équipés de chaque côté d'une aile latérale inférieure 46, ces ailes supportant un panneau photovoltaïque 4 disposé d'un seul côté pour un rail d'extrémité, ou deux panneaux de chaque côté pour les autres rails.

Le plan vertical du support 42 s'insérant dans une fente centrale supérieure du rail de guidage 26, chaque jeu de quatre roulettes 44 est ajusté dans une des sections en « C » afin de la guider de manière précise, tout en reprenant des efforts dus à la masse ainsi qu'aux conditions climatologiques s'appliquant sur la partie mobile 8. Pour cela deux roulettes 44 fixées aux extrémités du support, sont en appui sur le plan supérieur de guidage de la section en « C », et deux autres roulettes fixées juste à côté de ces deux premières roulettes, sont en appui sur le plan inférieur de guidage de cette section.

Un rebord se trouvant à l'extrémité intérieure du rail de guidage, vient en appui sur des butées de fin de course 32 fixées sur le support 42 après la dernière roulette 44 vers le côté intérieur, pour former un arrêt de ce rail quand la partie mobile 8 du brise-soleil est entièrement déployée, les vérins 28 étant en fin de course.

On obtient ainsi un guidage précis du rail de guidage 26, comprenant un roulement sans frottement lors du mouvement de la partie mobile 8 du brise-soleil, avec un écartement maximum des roulettes disposées aux extrémités du support 42 permettant de soutenir des efforts et de résister au couple de basculement généré par cette partie mobile.

La figure 5 présente de plus en dessous du premier rail de guidage 26 de l'extrémité du brise-soleil, disposé à gauche de cette figure, le vérin 28 qui est une vue en coupe.

Les figures 6 et 7 présentent un caisson de renfort 50 formé dans une tôle, qui fait la liaison entre chaque traverse 24 et son support 20 fixé au mur du bâtiment.

Le caisson de renfort 50 est lié au support 20 dans sa partie supérieure par la vis 22 formant un pivot disposé près du bord intérieur, et dans sa partie inférieure par une tige filetée de réglage 52 fixée à ce support. La tige filetée 52 est engagée dans un perçage d'une cale 54 fixée par deux vis au caisson de renfort 50, sa position axiale étant réglée par un écrou disposé de chaque côté de cette cale, afin de bloquer la position en serrant cette cale.

On réalise ainsi par le réglage de la position de la tige filetée 52 par rapport au caisson de renfort 50, un pivotement de ce caisson autour de la vis formant un pivot supérieur 22, et de la traverse 24 qu'il supporte. L'angle de réglage de cette traverse 24 par rapport à l'horizontal, est compris entre 30 et 40°.

Le réglage de l'inclinaison de l'ensemble du brise-soleil, compris entre 30 et 40°, permet d'optimiser cette inclinaison en fonction notamment de la latitude de l'installation, pour obtenir la meilleure exposition au soleil des cellules photovoltaïques 4. On obtient en même temps avec ce réglage, la meilleure protection du bâtiment contre le rayonnement solaire.

Le caisson 50 comporte une face tournée vers le côté extérieur du brise-soleil, comprenant une chape 60 vissée dessus, recevant un embout 62 disposant d'un perçage qui reçoit l'extrémité intérieur du vérin 28.

Avantageusement on propose des modules de base de brise-soleil comportant dans la longueur deux panneaux photovoltaïques, encadrés à chaque fois par un vérin 28. On a ainsi un nombre de vérin 28 égal au nombre de modules de base, plus un vérin disposé à l'extrémité finale de la longueur. Les modules sont alors assemblés entre eux pour former un brise-soleil de longueur variable.

Les vérins électriques 28 sont pilotés par une commande électronique permettant d'obtenir un mouvement synchronisé de chacun de ces vérins. On peut en particulier réaliser un automatisme qui sort la partie mobile 8 quand le rayonnement solaire est important, afin d'obtenir à la fois une meilleure protection du bâtiment contre ce rayonnement, ainsi qu'une production d'électricité plus importante.

L'automatisme peut aussi réaliser une protection contre les vents importants mesurés par un anémomètre disposé à proximité, en particulier pour des vitesses du vent supérieur à 40 km, en rétractant automatiquement la partie mobile 8 quand ce seuil de vitesse est atteint.

Avantageusement la commande électronique dispose d'une alimentation électrique indépendante de secours permettant en cas de coupure de l'alimentation électrique venant du réseau, par exemple en cas d'orage qui peut entraîner des vents violents, de réaliser de manière autonome la rétractation de la partie mobile 8 afin d'assurer la sécurité de l'installation.

On notera qu'un brise-soleil disposant de douze panneaux photovoltaïques 4, comme présenté figure 1, peut développer quand toute la surface est déployée, une puissance nominale de production d'énergie électrique d'environ 3 kW.

En variante le brise-soleil suivant l'invention peut comporter d'autres types de mouvement de la partie mobile 8. On peut notamment concevoir une partie mobile 8 qui coulisse au-dessus de la partie fixe 2, pour venir se superposer dessus dans une position rétractée. On peut aussi concevoir que le vérin 28 peut être incorporé dans les traverses 24 ou le rail de guidage 26

On peut installer avantageusement le brise-soleil suivant l'invention sur des bâtiments privés comme des maisons ou des immeubles d'habitation, sur des bâtiments à usage professionnel comme des bureaux ou des ateliers, ou sur des bâtiments publics.

## Revendications

1. Brise-soleil destiné à être fixé sur un bâtiment par un côté intérieur dudit brise-soleil, afin de protéger ce bâtiment du rayonnement solaire, comportant une partie fixe (2) équipée de traverses (24) disposées transversalement par rapport au côté intérieur, qui supportent chacune des moyens de guidage d'une partie mobile (8) permettant de la déplacer vers la partie fixe pour obtenir un recouvrement de ces parties sous l'action d'un système de motorisation, chaque traverse (24) comportant à son extrémité extérieure un support (42), **caractérisé en ce que** la partie fixe (2) et la partie mobile (8) reçoivent des cellules photovoltaïques (4), et **en ce que** les moyens de guidage de chaque traverse (24) comportent un rail de guidage (26) comprenant deux sections en « C » et recevant deux jeux de quatre roulettes (44), le support (42) comportant un plan vertical et de chaque côté de ce plan vertical un des deux jeux de quatre roulettes, chaque jeu de quatre roulettes (44) étant ajusté dans une des deux sections de ce rail de guidage (26), deux desdites quatre roulettes étant fixées aux extrémités du support (42), et étant en appui sur un plan supérieur de guidage de cette section, et deux autres desdites quatre roulettes étant en appui sur un plan inférieur de guidage de cette section.

2. Brise-soleil selon la revendication 1, **caractérisé en ce que** le rail de guidage (26) est formé par des profilés de tôle pliée qui sont assemblés entre eux.

3. Brise-soleil selon la revendication 1 ou la revendication 2, **caractérisé en ce qu'**il comporte un moyen de réglage de l'inclinaison (52) disposé entre la partie fixe (2) et d'autres supports (20).

4. Brise-soleil selon la revendication 3, **caractérisé en ce que** la partie fixe (2) est reliée à chacun des autres supports (20) par un pivot (22), et par une tige filetée (52) qui règle la rotation de cette partie fixe autour de ce pivot.

5. Brise-soleil selon la revendication 3 ou 4, **caractérisé en ce que** le moyen de réglage de l'inclinaison (52) permet un réglage de la pente des panneaux photovoltaïques (4) par rapport à l'horizontale, qui est comprise entre environ 30 et 40°.

6. Brise-soleil selon l'une quelconque des revendications précédentes, **caractérisé en ce qu'**il comporte une brosse (34) balayant la surface de cellules photovoltaïques (4) lors des mouvements de la partie mobile (8).

7. Brise-soleil selon l'une quelconque des revendications précédentes, **caractérisé en ce que** le système de motorisation comporte des actionneurs comprenant des vérins électriques (28) disposés transversalement.

8. Brise-soleil selon l'une quelconque des revendications précédentes, **caractérisé en ce que** le système de motorisation comporte une commande qui déplace automatiquement la partie mobile (2) suivant les conditions climatiques comme l'ensoleillement ou le vent.

9. Brise-soleil selon l'une quelconque des revendications précédentes, **caractérisé en ce que** le système de motorisation comporte une commande disposant d'une alimentation électrique indépendante de secours permettant de réaliser de manière autonome la rétractation de la partie mobile (8).

## Patentansprüche

1. Sonnenblende zur Befestigung an einem Gebäude mittels einer Innenseite der Sonnenblende, so dass das Gebäude vor Sonneneinstrahlung geschützt ist, umfassend einen unbeweglichen Teil (2), welcher ausgestattet ist mit transversal zur Innenseite angeordneten Traversen (24), welche jeweils Führungsvorrichtungen eines beweglichen Teils (8) stützen, um den beweglichen Teil zum unbeweglichen Teil hin zu bewegen, um eine Abdeckung der Teile unter Einwirkung eines Antriebssystems zu erreichen, wobei jede Traverse (24) an ihrem äußeren Endabschnitt eine Stütze (42) umfasst, **dadurch gekennzeichnet, dass** der unbewegliche Teil (2) und der bewegliche Teil (8) Fotovoltaikzellen aufnehmen und dass die Führungsvorrichtungen jeder Traverse (24) eine Führungsschiene (26) umfassen, welche zwei C-förmige Querschnitte aufweist und zwei Sätze von vier Rollen (44) aufnimmt, wobei die Stütze (42) eine vertikale Ebene umfasst und auf jeder Seite dieser vertikalen Ebene eine der zwei Sätze der vier Rollen angeordnet ist, wobei jeder Satz der vier Rollen (44) einem der zwei Abschnitte der Führungsschiene (26) angepasst ist, wobei zwei von den vier Rollen am Endabschnitt der Stütze (42) befestigt sind und auf einer oberen Führungsebene des Abschnittes aufgestützt sind und zwei andere der vier Rollen auf einer unteren Führungsebene des Abschnitts aufgestützt sind.

2. Sonnenblende gemäß Anspruch 1, **dadurch gekennzeichnet, dass** die Führungsschiene (26) durch gefalzte Blechprofile gebildet wird, welche miteinander verbunden sind.

3. Sonnenblende, gemäß Anspruch 1 oder 2, **dadurch gekennzeichnet, dass** sie eine Neigungssteuerungsvorrichtung (52) umfasst, welche zwischen dem unbeweglichen Teil (2) und anderen Stützen (20) angeordnet ist.

4. Sonnenblende gemäß Anspruch 3, **dadurch gekennzeichnet, dass** der unbewegliche Teil (2) mit jedem der anderen Stützen (20) mittels eines Drehzapfens (22) und einem Gewindestift (52), welcher die Rotation des unbeweglichen Teils um den Drehzapfen regelt, verbunden ist.

5. Sonnenblende gemäß Anspruch 3 oder 4, **dadurch gekennzeichnet, dass** die Neigungssteuerrungsvorrichtung (52) eine Steuerung der Neigung der Fotovoltaikmodule (4) im Verhältnis zu Horizontalen, welche zwischen 30 und 40 ° liegt, ermöglicht.

6. Sonnenblende gemäß einen der vorstehenden Ansprüche, **dadurch gekennzeichnet, dass** sie eine Bürste (34) umfasst, welche die Oberfläche der Fotovoltaikzellen (4) kehrt.

7. Sonnenblende gemäß einem der vorstehenden Ansprüche, **dadurch gekennzeichnet, dass** das Antriebssystem Elektrozylinder (28) umfasst, welche transversal angeordnet sind.

8. Sonnenblende gemäß einem der vorstehenden Ansprüche, **dadurch gekennzeichnet, dass** das Antriebssystem eine Steuerung umfasst, die den beweglichen Teil (8) automatisch entsprechend den Wetterbedingungen, wie Sonne oder Wind, bewegt.

9. Sonnenblende gemäß einem der vorstehenden Ansprüche, **dadurch gekennzeichnet, dass** das Antriebssystem eine Steuerung umfasst, welche eine unabhängige Notstromversorgung enthält, welche die selbstständige Zurückziehung des beweglichen Teils ermöglicht.

## Claims

1. Sunshade intended to be fixed to a building by an inner side of said sunshade, in order to protect this building from solar radiation, comprising a fixed portion (2) equipped with crosspieces (24) arranged transversely with respect to the inner side, which each support means for guiding a movable portion (8) enabling it to be moved towards the fixed portion in order to obtain a covering of these parts under the action of a motorization system, each crosspiece (24) comprising at its outer end a support (42), **characterized in that** the fixed part (2) and the movable part (8) receive photovoltaic cells (4), and **in that** the guide means of each crosspiece (24) comprise a guide rail (26) comprising two "C" sections and receiving two sets of four rollers (44), the support (42) comprising a vertical plane and on each side of this vertical plane one of the two sets of four rollers, each set of four rollers (44) being fitted in one of the two sections of this guide rail (26), two of said four rollers being fixed to the ends of the support (42), and bearing on an upper guiding plane of this section, and two other of said four rollers bearing on a lower guiding plane of this section.

2. The sunshade according to claim 1, wherein the guide rail (26) is formed by folded sheet metal profiles which are assembled together.

3. The sunshade according to claim 1 or claim 2 further comprising an inclination adjusting device (52) disposed between the fixed portion (2) and others crosspieces (20).

4. The sunshade according to claim 3, wherein the fixed portion (2) is linked to each of the others crosspieces (20) by a pivot (22), and by a threaded rod (52) which adjusts the rotation of this fixed portion about this pivot.

5. The sunshade according to claim 3 or claim 4, wherein the inclination adjusting device (52) allows an adjustment of a slope of the photovoltaic panels (4) relative to a horizontal position, which is comprised between about 30 and 40°.

6. The sunshade according to anyone of the preceding claims further comprising a brush (34) for sweeping a surface of photovoltaic cells (4) during movements of the movable portion (8).

7. The sunshade according to anyone of the preceding claims, wherein the motorization system includes actuators comprising electrical cylinders (28) disposed transversely of the inner side.

8. The sunshade according to anyone of the preceding claims, wherein the motorization system includes a control which automatically displaces the movable portion (8) depending on climatic conditions such as sunshine or wind.

9. The sunshade according to anyone of the preceding claims, wherein the motorization system includes a control having an emergency separate power supply allowing independent retraction of the movable portion (8).
